# EUROPEAN PATENT APPLICATION

(11) **EP 4 733 043 A1**
(43) Date of publication of application: **29.04.2026**
(21) Application number: 24895936.3
(22) Date of filing: 23.09.2024
(51) Int. Cl.: B29C 64/255

(54) **PULSING RELEASE MODULE, PULSING RELEASE RESIN TANK, AND 3D PRINTING DEVICE AND PRINTING METHOD**

(30) Priority: 30.11.2023 CN 202311643769
(71) Applicant: Guangzhou Heygears IMC. Inc, Guangzhou, Guangdong 510663 (CN)
(72) Inventor: ZHANG, Siwei, Guangzhou, Guangdong 510663 (CN); DING, Peng, Guangzhou, Guangdong 510663 (CN); HU, Jun, Guangzhou, Guangdong 510663 (CN); LIANG, Yuhao, Guangzhou, Guangdong 510663 (CN)
(74) Representative: Novagraaf Technologies
(86) International application number: PCT/CN2024/120448
(87) International publication number: WO 2025/112838

(57) **Abstract**

The present disclosure relates to a pulsing release module, a pulsing release material tray, a 3D printing device and a 3D printing method. The pulsing release module comprises a material tray assembly, a support assembly and a pulsing gas supply assembly. The material tray assembly is provided with a release film; the support assembly is provided below the material tray assembly, the support assembly is provided with a support member, and the support member and the release film have a first preset distance therebetween in a height direction, so as to form a gas chamber between the support member and the release film; the support member is respectively provided with a gas inlet and a gas outlet in communication with the gas chamber; and the pulsing gas supply assembly comprises a gas oscillation component and a gas transfer pipeline, the gas oscillation component is provided on the gas transfer pipeline, and the gas transfer pipeline is connected with the gas inlet.

## Description

### Related Application

This disclosure claims priority to Chinese Patent Application No. 202311643769.0, filed with the Chinese National Intellectual Property Administration on November 30, 2023 and entitled "Pulsing Release Module, Pulsing Release Material tray, 3D Printing Device and Printing Method," which is incorporated herein by reference in its entirety.

### Technical Field

The present disclosure relates to the field of 3D printing technology, and in particular, to a pulsing release module, a pulsing release material tray, a 3D printing device, and a printing method.

### Background

The photocuring 3D printing technology (such as DLP technology and LCD technology) uses a light source to irradiate liquid photosensitive resin, causing it to be cured and formed on a forming platform, thereby curing the photosensitive material layer by layer to form a three-dimensional object. When photocuring 3D printing adopts a bottom-up forming method, each layer of a model is cured between the rigid surface of a material tray and a forming platform. After curing, as the printed model is adhered to the rigid surface of the material tray, the two must be separated apart so as to print the next layer of the model. During the separating process, there will be significant separating force and noise. When a specific material (such as an elastic material) is used to print, or a specific model (such as a model having an overhanging arm) is printed, if the separating force is too high, there is a risk of printed object detachment or printed object warping, which may result in print failure and even potential damage to the printing equipment.

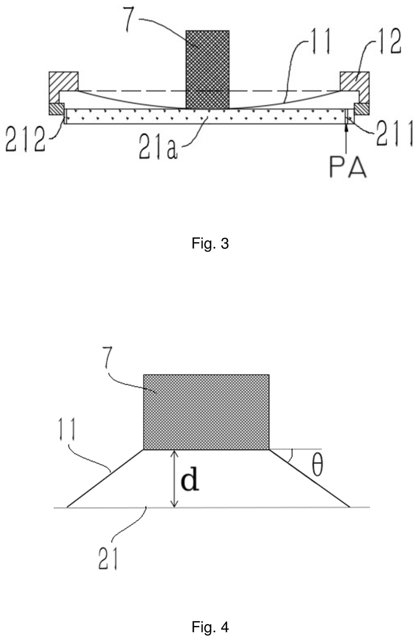

To reduce the separating force when the printed model is separated, in the prior art, a flexible release film is used to replace the rigid surface of the material tray. As the release film has a certain degree of extensibility, the separating between the printed model and the material tray after curing can be converted from surface separation to line separation, thereby reducing the separating force to some extent. When the forming platform drives the printed model to separate from the flexible release film, the angle between the flexible release film and the bottom surface of the printed model must reach the separating angle threshold θ so as to achieve separation, as shown in Fig. 4. As the flexible release film has a certain degree of extensibility, it undergoes a certain degree of elastic deformation under the pulling force of the printed model, which increases the separating stroke and reduces the separating efficiency. In addition, a rigid support member is usually provided beneath the flexible release film to maintain a certain level of rigidity for the material tray. When the forming platform drives the printed model to press down, the lower surface of the flexible release film adheres to the upper surface of the rigid support member. During separating, the flexible release film must first be separated from the rigid support member before it can be separated from the printed model. As there is a relatively large vacuum adsorption force between the rigid support member and the flexible release film, the separating force increases, making the transition from surface separation to line separation less effective.

### Summary

The present disclosure provides a pulsing release module, a pulsing release material tray, a 3D printing device and a 3D printing method, so as to solve the technical problems in the prior art that when a 3D printing model is separated, the separating force is large and the separating stroke is long.

According to a first aspect, the present disclosure provides a pulsing release module, including:
a material tray assembly, wherein the material tray assembly includes a release film;
a support assembly, the support assembly is provided below the material tray assembly, the support assembly includes a support member, a first preset distance is provided between the support member and the release film in a height direction so as to form a gas chamber between the support member and the release film, and the support member is provided with a gas inlet and a gas outlet in communication with the gas chamber; and
a pulsing gas supply assembly, the pulsing gas supply assembly includes a gas oscillation component and a gas transfer pipeline, the gas oscillation component is provided on the gas transfer pipeline, and the gas transfer pipeline is connected with the gas inlet.

Optionally, a sealing member is provided along the circumferential direction of the support member, and the sealing member is configured to connect with the material tray assembly.

Optionally, the sealing member is provided with flow ports in communication with the gas chamber.

Optionally, an auxiliary member is provided on a side of the support member facing the release film, such that a separating angle is formed between the release film and the support member when the release film is adhered to the support member and has a trenchancy to move in a direction away from the support member.

Optionally, at least two auxiliary members are distributed along a circumferential direction of the support member to form a gas chamber with a consistent height between the support member and the release film.

Optionally, four auxiliary members is four are respectively provided corresponding to four corners of the support member; and/or, four auxiliary members are respectively provided corresponding to four sides of the support member.

Optionally, the auxiliary member is made of any of tape, plastic sheet, metal gasket, foam, wooden sheet, fiber cloth or a combination thereof.

Optionally, the pulsing gas supply assembly further includes a control valve for controlling gas to enter gas chamber according to a preset requirement.

Optionally, the support member is a transparent rigid support member or a transparent flexible support member.

Optionally, when the support assembly is the transparent flexible support member, the support assembly further includes a rigid substrate provided below the transparent flexible support member.

Optionally, the support member is any of: a fluoropolymer film, a polydimethylsiloxane film, a polymethylpentene film, an acrylic adhesive, polymethyl methacrylate, polytetrafluoroethylene, polyethylene terephthalate, a fluoroethylene-vinyl copolymer, polyethylene, polypropylene, polyvinyl chloride, a photosensitive resin, a thermosensitive resin, glass, a display screen or a combination thereof.

According to a second aspect, the present disclosure provides a pulsing release material tray. The pulsing release material tray includes a release film and a support member; a second preset distance is provided between the support member and the release film in a height direction, so as to form a gas chamber between the support member and the release film; the support member is provided with a gas inlet and a gas outlet in communication with the gas chamber; and
the gas inlet and the gas outlet are configured to connect with a pulsing gas supply assembly.

Optionally, the support member is a transparent flexible support member.

Optionally, the transparent flexible support member is any of: a fluoropolymer film, a polydimethylsiloxane film, a polymethylpentene film, an acrylic adhesive, polymethyl methacrylate, polytetrafluoroethylene, polyethylene terephthalate, a fluoroethylene-vinyl copolymer, polyethylene, polypropylene, polyvinyl chloride, a photosensitive resin, a thermosensitive resin or a combination thereof.

Optionally, the support assembly further includes a rigid substrate provided below the transparent flexible support member.

Optionally, an auxiliary member is provided on a side of the support member facing the release film, such that a separating angle is formed between the release film and the support member when the release film is adhered to the support member and has a trenchancy to move in a direction away from the support member.

Optionally, at least two auxiliary members are distributed along the circumferential direction of the support member to form a gas chamber with a consistent height between the support member and the release film.

Optionally, four auxiliary members are respectively provided corresponding to four corners of the support member; and/or, four auxiliary members are respectively provided corresponding to four sides of the support member.

Optionally, the auxiliary member is made of any of tape, plastic sheet, metal gasket, foam, wooden sheet, fiber cloth or a combination thereof.

Optionally, a position sensor is provided on a material tray main body, and the position sensor is configured to detect position data of the release film.

According to a third aspect, the present disclosure provides a 3D printing device, including the pulsing release module provided in the first aspect of the present disclosure or the pulsing release material tray provided in the second aspect of the present disclosure, and further including a forming platform, an optical engine and a control system, wherein the forming platform is provided above a material tray assembly, the optical engine is provided below a support assembly, and the control system is associated with the forming platform, the optical engine and the pulsing gas supply assembly.

Optionally, the control system communicates with the pulsing gas supply assembly to generate control instructions according to a pre-configured control strategy and send the instructions to the pulsing gas supply assembly.

Optionally, the control strategy is configured to, generate and send a first control instruction when one or more of the following are detected: the release film of the 3D printing device is higher than a preset marking position, the gas pressure of the gas in the 3D printing device is higher than a preset gas pressure range, the gas flow of the gas in the 3D printing device is higher than a preset range, the concentration of the gas in the 3D printing device is higher than a preset concentration range, or the force borne by the lower surface of the release film of the 3D printing device is greater than the force borne by the upper surface, wherein the first control instruction includes controlling the pulsing gas supply assembly to reduce the amount of gas delivered; and
generate and send a second control instruction when one or more of the following are detected: the release film of the 3D printing device is lower than a preset marking position, the gas pressure of the gas in the 3D printing device is lower than a preset gas pressure range, the air flow of the gas in the 3D printing device is lower than a preset range, the concentration of the gas in the 3D printing device is lower than a preset concentration range, and the force borne by the upper surface of the release film of the 3D printing device is less than the force borne by the lower surface wherein the second control instruction includes controlling the pulsing gas supply assembly to increase the amount of gas delivered.

Optionally, the forming platform is provided with a clearance design for avoiding the auxiliary member.

Optionally, the clearance design is at least one of a clearance chamfer and a clearance slot.

According to a fourth aspect, the present disclosure provides a 3D printing method using the 3D printing device provided in the third aspect of the present disclosure, including the following steps:
a collection of slice images corresponding to a three-dimensional model to be printed is acquired, and a printing difficulty value corresponding to each layer of the slice images is calculated;
on the basis of the printing difficulty value, a printing parameter and a pulsing air parameter corresponding to each slice image are determined; and
a model printing operation corresponding to each slice image is determined on the basis of the printing parameter, and a model separating operation corresponding to each slice image is determined on the basis of the pulsing air parameter.

Optionally, the pulsing air parameter includes pulse frequency, and the pulse frequency is directly proportional to the printing difficulty value.

Optionally, the model separating operation includes: during model separating, introducing a pulsing air into the gas inlet at the pulse frequency, such that a volume of the gas chamber changes periodically, thereby causing the release film to oscillate periodically.

The present disclosure further provides a three-dimensional printing system. The three-dimensional printing system includes: a material tray assembly, including a release film; a support assembly, the support assembly includes a support member, a gas chamber is formed between the support member and the release film, and the gas chamber is in communication with a gas inlet and a gas outlet; and a gas supply assembly, configured to transfer gas to the gas chamber and configured to cause the volume of the gas chamber to change periodically.

In some embodiments, the gas supply assembly is configured to intermittently transfer gas to the gas chamber.

In some embodiments, the gas supply assembly transfers gas to the gas chamber at different flow rates, and the gas in the gas chamber is discharged through the gas outlet at a constant flow rate.

Compared with the prior art, the described technical solutions provided in the embodiments of the present disclosure have the following advantages:
according to the pulsing release module provided in the embodiments of the present disclosure, when the printed object is separated from the release film, the pulsing gas supply assembly inputs a pulsing air into the gas chamber through the gas inlet, such that the gas volume in the gas chamber changes periodically, thereby causing the release film to oscillate periodically. This allows the release film to oscillate in a wave-like manner during the separating process, which can rapidly break the vacuum adsorption state between the release film and the support member. In addition, it also enables the bottom surface of the printed object and the release film to reach the separating angle threshold within a shorter separating stroke, which is beneficial to reducing the separating force and separating stroke, improving the printing efficiency and printing success rate, and lowering the risk of print detachment.

According to the pulsing release material tray provided in the embodiments of the present disclosure, the support member and the release film have a second preset distance therebetween in the height direction, so as to form a gas chamber, the support member is respectively provided with a gas inlet and a gas outlet in communication with the gas chamber, and the pulsing gas supply assembly inputs a pulsing air into the gas chamber through the gas inlet, such that the volume of the gas in the gas chamber changes periodically, thereby causing the release film to oscillate periodically. As a result, when the printed object is separated from the release film, the release film oscillates in a wave-like manner during the separating process, which can rapidly break the vacuum adsorption state between the release film and the support member. In addition, it enables the bottom surface of the printed object and the release film to reach the separating angle threshold within a shorter separating stroke, which is beneficial to reducing the separating force and separating stroke, improving the printing efficiency and printing success rate, and lowering the risk of print detachment.

### Brief Description of the Drawings

The accompanying drawings, which are incorporated herein and form a part of the description, illustrate embodiments consistent with the present disclosure and together with the description, serve to explain the principles of the disclosure.

To describe the technical solutions in the embodiments of the present disclosure or in the prior art more clearly, the following briefly introduces the accompanying drawings required for describing the embodiments or the prior art. Apparently, a person of ordinary skill in the art may still derive other drawings from these accompanying drawings without creative efforts.

One or more embodiments are illustrated by way of example in the figures of the accompanying drawings, which do not constitute a limitation on the embodiments, and elements in the figures having the same reference numerals are designated as like elements, and the figures of the drawings are not to scale unless otherwise specified.
Fig. 1 is a schematic diagram of the structure of a pulsing release module according to an embodiment of the present disclosure;
Fig. 2 is a schematic diagram of the connection between a material tray assembly and a support assembly according to an embodiment of the present disclosure;
Fig. 3 is a schematic diagram of the connection between a printed object and a pulsing release module according to an embodiment of the present disclosure;
Fig. 4 is a schematic diagram of the separating of a release film in the prior art;
Fig. 5 is a schematic diagram of the separating of a pulsing release module according to an embodiment of the present disclosure;
Fig. 6 is a top view of a pulsing release material tray according to an embodiment of the present disclosure;
Fig. 7 is a sectional view taken along line A-A in Fig. 6 according to an embodiment of the present disclosure;
Fig. 8 is a sectional view of a pulsing release material tray according to an embodiment of the present disclosure;
Fig. 9 is a schematic diagram of the partial structure of a support assembly, a pulsing release material tray and a forming platform according to an embodiment of the present disclosure;
Fig. 10 is a top view of a support assembly, a pulsing release material tray and a forming platform according to an embodiment of the present disclosure;
Fig. 11 is a partial structural diagram of a support assembly, a pulsing release material tray and a forming platform according to an embodiment of the present disclosure;
Fig. 12 is a partial structural diagram of a support assembly, a pulsing release material tray and a forming platform according to an embodiment of the present disclosure;
Fig. 13 is a schematic diagram of the partial structure of a support assembly, a pulsing release material tray and a forming platform according to an embodiment of the present disclosure;
Fig. 14 is a top view of a support assembly, a pulsing release material tray and a forming platform according to an embodiment of the present disclosure;
Fig. 15 is a partial structural diagram of a support assembly, a pulsing release material tray and a forming platform according to an embodiment of the present disclosure.
Fig. 16 is a schematic diagram of the structure of a 3D printing device according to an embodiment of the present disclosure;
Fig. 17 is a schematic diagram of the controlling of a 3D printing device according to an embodiment of the present disclosure;
Fig. 18 is a flowchart of a 3D printing method according to an embodiment of the present disclosure.

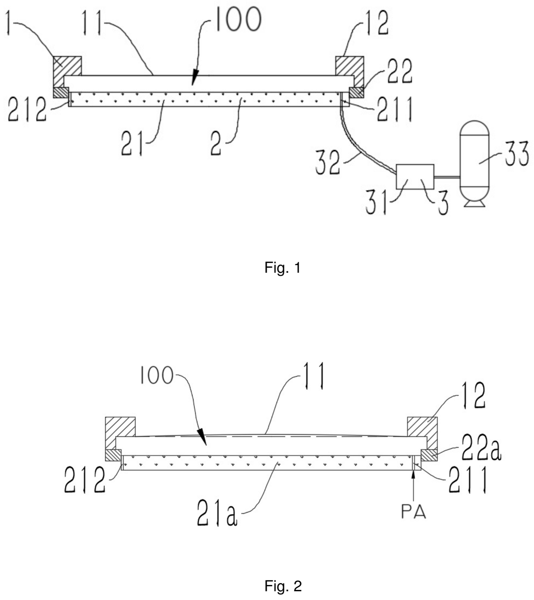

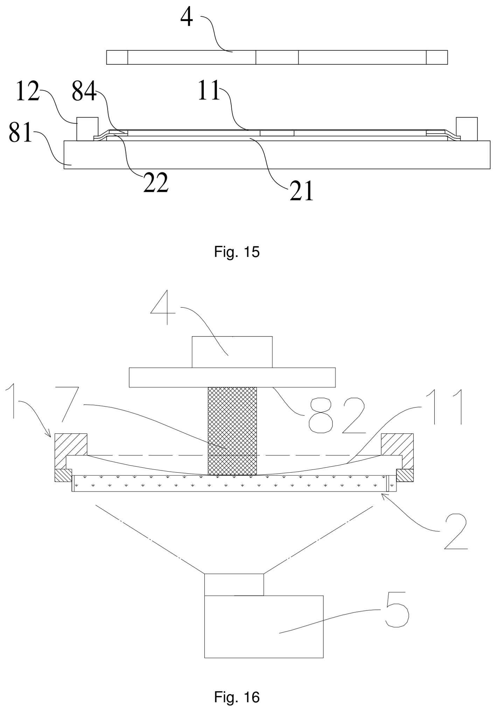

It should be noted that, in Figs. 2, 3 and 16, the dashed line indicates the initial position of the release film, and the dot-dash line in Fig. 16 indicates the irradiation range of the optical engine.

Description of Reference Numerals:
d: separating stroke;
1: material tray assembly; 11: release film; 12: material tray main body; 13: position sensor;
2: support assembly; 21: support member; 21a: transparent rigid support member; 21b: transparent flexible support member; 211: gas inlet; 212: gas outlet; 22: sealing member; 22a: first sealing member; 22b: second sealing member; 221: flow port; 23: rigid substrate; 24: connecting member;
3: pulsing gas supply assembly; 31: gas oscillation component; 32: gas pipeline; 33: gas source; 34: control valve;
4: forming platform; 5: optical engine; 6: control system; 7: printed object;
81: base; 82: forming surface; 83: clearance design; 84: auxiliary member;
100: gas chamber.

### Detailed Description of the Embodiments

In order to make the objectives, technical solutions and advantages of the embodiments of the present disclosure more apparent, the technical solutions in the embodiments of the present disclosure will be described below in a clearly and fully understandable way with reference to the drawings related to the embodiments of the present disclosure. Obviously, the described embodiments are only a part but not all of the embodiments of the present disclosure. All other embodiments obtained by persons of ordinary skill in the art based on the embodiments of the present disclosure without creative efforts shall belong to the scope of protection of the present disclosure.

The following disclosure provides many different embodiments or examples for implementing different structures of the present disclosure. In order to simplify the disclosure of the present disclosure, components and configurations of specific examples are described below. Certainly, they are merely examples and are not intended to limit the present disclosure. In addition, the present disclosure may repeat reference numerals and/or letters in the various examples. This repetition is for the purpose of simplicity and clarity and does not in itself indicate a relationship between the various embodiments and/or arrangements discussed.

For ease of description, spatial relative terms may be used herein to describe relative positional relationships or motion of one element or feature with respect to another element or feature as shown in the figures. The relative terms are, for example, "inner", "outer", "inside", "outside", "beneath", "below", "over", "above", "front", "back", and the like. Such spatially relative terms are intended to encompass different orientations of the device in use or operation in addition to the orientation depicted in the figures. For example, if a positional roll over or a change in attitude or a change in motion state occurs to the device in the figures, then the indications of such orientation change accordingly, e.g., an element described as "beneath" or "below" another element or feature would then be oriented "over" or "above" the other element or feature. Thus, the example term "below" may encompass both orientations of above and below. The device may be otherwise oriented (rotated 90 degrees or in other orientations) and the spatially relative descriptors used herein are interpreted accordingly.

Please refer to Fig. 16, the present disclosure provides a 3D printing device. In one embodiment, the 3D printing device can include a forming platform 4, a material tray assembly 1, a support assembly 2, etc.

The material tray assembly 1 can be used to hold a printing material, and the forming platform 4 can be provided on the side of the material tray assembly 1 where the printing material is held. In this embodiment, the forming platform 4 may have a forming surface 82, and during the printing process, a printed object may be cured layer by layer on the forming surface 82, so as to form a desired printed object by the printing material.

It should be noted that, the 3D printing technologies applicable in the present disclosure may include photocuring 3D printing technologies such as DLP, LCD, Micro-LED, and Mini-LED, and other surface exposure-based 3D printing technologies, which are not limited herein.

When a tightened film material tray is used in a 3D printing device, during the printing process, the forming platform presses down to facilitate contact between the bottom of the printed object and a liquid photosensitive material. This generates a liquid discharge force on the upper surface of a flexible release film, the flexible release film undergoes elastic deformation, and moves close to the rigid support member till adheres to the rigid support member. A rigid support beneath the flexible release film may generate an electrostatic force on the lower surface of the flexible release film. Under the combined action of the liquid discharge force and the electrostatic force, a vacuum is formed between a portion of the release film and the rigid support member. After a bottom layer of the printed model is cured, the flexible release film must first be separated from the rigid support member by surface separating. This surface separating process increases the separating force. The adhesion may fail during separating, leading to sudden changes in separating force. This can cause printing failure or abnormalities on the release surface of that layer. After the surface separating between the flexible release film and the rigid support member is completed, the forming platform drives the printed object to rise further, and line separating can be achieved only when the bottom surface of the printed object and the flexible release film reach the separating angle threshold θ. As the flexible release film has a certain degree of extensibility, the separating stroke is relatively long, as shown in Fig. 4.

To address the challenges of a large separating force and a long separating stroke during 3D printing model separating, the present disclosure provides a pulsing release module, a 3D printing device and a 3D printing method. A gas chamber 100 can be formed by the release film 11 and the support member 21, and a gas oscillation component 31 of the pulsing gas supply assembly injects a pulsing air into the gas chamber, such that the volume of the gas in the gas chamber 100 changes, thereby causing the release film 11 to oscillate periodically, which rapidly break the vacuum adsorption state between the release film 11 and the support member 21. This avoids the impact of surface separating between the release film 11 and the support member 21 on the separating force, and the separating force can be significantly reduced. During the oscillation process, the release membrane 11 can quickly reach the separating angle threshold, which reduces the separating stroke, thereby improving printing efficiency and success rate, and reducing the risk of printed object detachment.

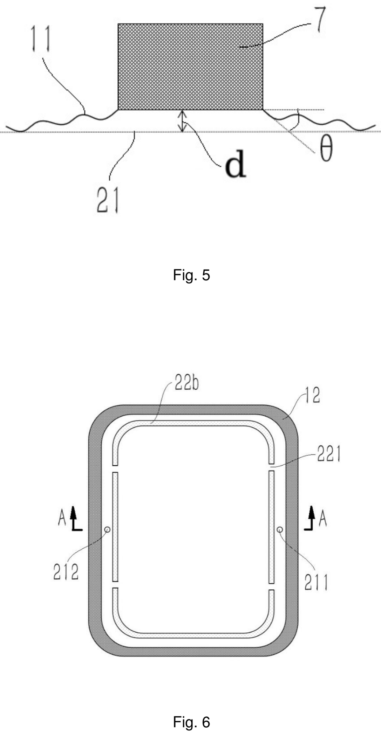

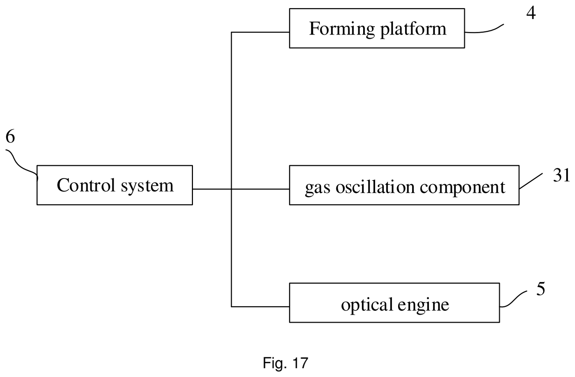

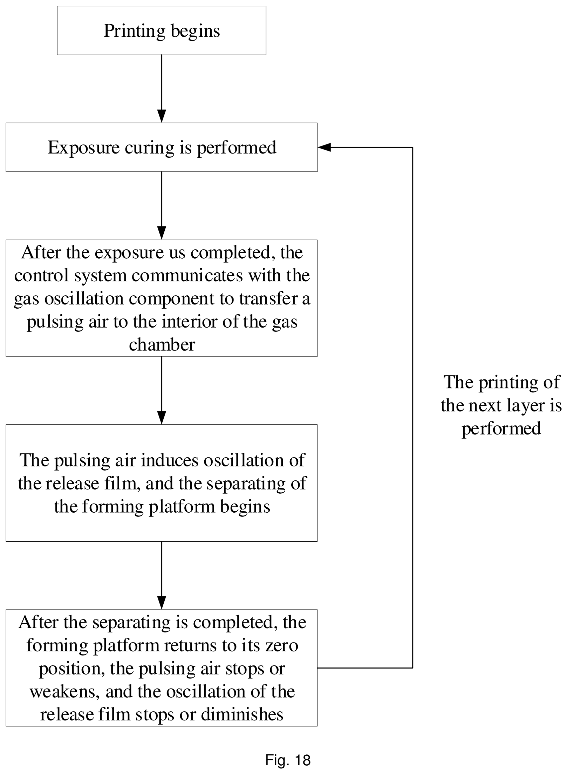

Please refer to Figs. 1 to 18, the embodiments of the present disclosure provide a pulsing release module, including a material tray assembly 1, a supporting assembly 2 and a pulsing gas supply assembly 3. The material tray assembly 1 includes a release film 11, which can be combined with a material tray main body 12 to form a material groove for holding a liquid photosensitive material (such as photosensitive resin). The support assembly 2 is connected below the material tray assembly 1, and the support assembly 2 includes a support member 21, which is used to support the release film 11 during the downward pressing of the forming platform 4. The support member 21 and the release film 11 have a first preset distance therebetween in the height direction, so as to form a gas chamber 100 between the support member 21 and the release film 11. The first preset distance is the thickness of the gas chamber, preventing the lower surface of the release film 11 from adhering to the upper surface of the support member 21 in an initial state, as shown in Fig.1. The support member 21 is provided with a gas inlet 211 and a gas outlet 212 which are in communication with the gas chamber 100, so as to facilitate the flow of gas into and out of the gas chamber 100. The pulsing gas supply assembly 3 includes a gas oscillation component 31 and a gas transfer pipeline 32, and the gas oscillation component 31 is provided on the gas transfer pipeline 32 and is used to convert the gas flow in the gas transfer pipeline 32 into a pulsing air. When the printed object 7 is separated from the release film 11, the pulsing gas supply assembly 3 inputs a pulsing air into the gas chamber 100 through the gas inlet 211, such that the volume of the gas in the gas chamber 100 changes periodically, thereby causing the release film 11 to oscillate periodically. As a result, the release film 11 oscillates in a wave-like manner during the separating process, which can rapidly break the vacuum adsorption state between the release film 11 and the support member 21. In addition, it enables the bottom surface of the printing member 7 and the release film 11 to reach the separating angle threshold θ within a shorter separating stroke d, as shown in Fig.5, which is beneficial to reduce the separating force and separating stroke, improve the printing efficiency and printing success rate, and reducing the risk of printed object detachment.

It should be noted that the release film 11 may be connected with the material tray main body 12 using a tightened film mechanism in the prior art, such that the release film 11 is in a horizontal state in an initial state, which facilitates control of the layer thickness of each layer of the printed object 7, and avoids the occurrence of uneven layer thickness. As the release film 11 is an elastic structure, changes in the gas pressure at the gas inlet 211 will cause slight changes in the internal volume of the gas chamber, as shown in Fig. 2, and the magnitude of the changes is characterized by the magnitude of changes in the gas pressure at the gas outlet 212.

It should be noted that, the first preset distance may be set according to requirements. In some embodiments of the present disclosure, the first preset distance is 0.01 mm to 10 mm, for example, 0.01 mm, 0.02 mm, 0.04 mm, 0.06 mm, 0.08 mm, 1 mm, 2 mm, 3 mm, 4 mm, 5 mm, 6 mm, 7 mm, 8 mm, 9 mm, 10 mm, or any value between two of these points. This is because, during exposure curing, the support member 21 is required to adhere to and support the bottom of the release film 11 so as to provide a stable forming surface for forming. If the thickness of the gas chamber 100 is too large, when a model with a small cross section is printed, it is difficult for the bottom of the printed object 7 to provide sufficient liquid discharge force for the release film 11; and thus it is hard for the release film 11 to adhere to the support member 21. When the cross sections of the printed object 7 change between layers, the forming surface is not stable, which may cause uneven printing layer thickness between layers.. In the present disclosure, when the release film 11 oscillates due to the pulsing air, the oscillation can rapidly break the vacuum adsorption effect provided by the adhesion between the release film 11 and the underlying support member 21 during the separating process after exposure curing, such that the entire gas chamber 100 can quickly return to its initial gas chamber state, and the separating force after breaking the vacuum is equivalent to that in a non-adhered gas chamber state; and thus it is unnecessary to increase the thickness of the gas chamber 100 to achieve this effect. When the first preset distance is 0.01 mm to 10 mm, the thickness of the gas chamber is relatively thin, facilitating adhesion and support of the bottom of the release film 11 by the support member 21 during forming, and providing a stable forming surface for forming. This enhances the forming accuracy of each cured layer and the consistency of the cured region, while also reducing the risk of abnormalities in first-layer zeroing during photocuring printing.

It should be noted that the gas oscillation component 31 may be a gas oscillator in the prior art. The pulsing gas supply assembly 3 further includes a gas source 33 connected with the gas oscillation component 31 and used to provide an initial gas flow. The gas source 33 may be nitrogen, oxygen, air or an inert gas. The gas transfer pipeline 32 may be provided with a pressure detection element and a valve element, so as to facilitate the detection of a pulsing air in the gas transfer pipeline 32.

In some embodiments, the pulsing gas supply assembly 3 includes a control valve 34 to control the entry of gas into the gas chamber 100 according to preset requirements. Specifically, the gas supply can be controlled on the basis of the requirements of the printed object 7, allowing for continuous gas supply, intermittent gas supply, or a combination of continuous and intermittent gas supply, which is not limited herein. A person skilled in the art may set the gas supply according to experimental requirements, process strategies, etc.

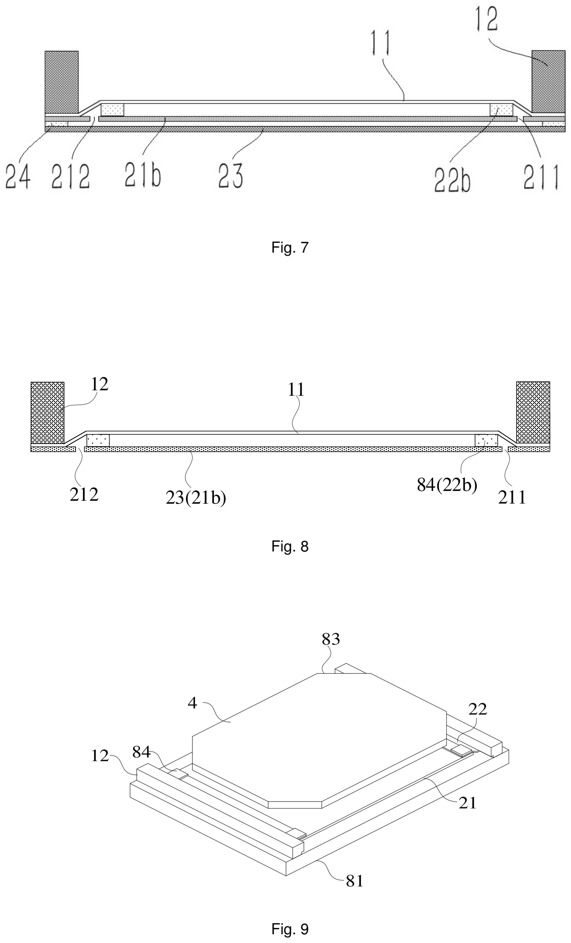

To ensure that the gas flow can only enter the gas chamber through the gas inlet 211 and exit the gas chamber through the gas outlet 212, in some embodiments of the present disclosure, a sealing member 22 is provided along the circumferential direction of the support member 21. The sealing member 22 is used to connect to the material tray assembly 1, ensuring a seal between the support member and the material tray assembly. Specifically, the sealing member 22 may be provided between the material tray main body 12 and the support member 21, as shown by the first sealing member 22a in Fig. 2; and the sealing member 22 may also be directly provided between the release film 11 and the support member 21, as shown by the second sealing member 22b in Fig. 7. The sealing member 22 is also an auxiliary member 84 provided between the release film 11 and the support member 21, as shown by the auxiliary member 84 in Fig. 8.

When the sealing member 22 is directly connected between the release film 11 and the support member 21, if the gas inlet 211 and the gas outlet 212 are located at the periphery of the sealing member 22, the pulsing air cannot enter the gas chamber 100 formed by the release film 11, the sealing member 22 and the support member 21. Therefore, in some embodiments of the present disclosure, the sealing member 22 is provided with flow ports 221 in communication with the gas chamber, as shown in Fig. 6.

It should be noted that the gas outlet 212 may be provided on the support member 21, or may be provided in region not sealed by the sealing member 22.

As the support member 21 needs to provide a stable forming surface for the release film 11 when adhered to the release film 11, in some embodiments of the present disclosure, the support member 21 is a transparent rigid support member 21a, as shown in Figs. 1-3. When the forming platform 4 and the printed object 7 press down on the release film 11, the upper surface of the transparent rigid support member 21a adheres to the bottom of the release film 11, thereby providing support and forming a stable forming surface for exposure curing.

In some embodiments, as shown in Figs. 7-15, in order to ensure that the support surface of the support member 21 facing the release film 11 is lower than the release film 11, so as to better control the height (thickness) of the gas chamber 100, the support assembly 2 may include the support member 21 and auxiliary members 84. The support member 21 may be provided on one side of the material tray assembly 1, specifically on the side of the material tray assembly 1 away from the forming platform 4. The auxiliary members 84 may be provided on one side of the support member 21 facing the release film 11, such that when the release film 11 is adhered to the support member 21 and has a tendency to move in a direction away from the support member 21, a separating angle is provided between the release film 11 and the support member 21. In addition, the auxiliary members 84 can also prevent the release film 11 from collapsing, thereby better ensuring that the gas chamber 100 maintains a preset height.

The material tray assembly 1 in this embodiment may be a material tray assembly 1 of a tightened film structure. Specifically, the material tray assembly 1 can further include a material tray main body 12 connected with the outer periphery of the release film 11. The release film 11 is connected with the material tray main body 12 in a tightened state, such that one side of the material tray main body 12 is in a closed state, and thus the material tray assembly 1 can be used to hold a printing material.

Further, the support member 21 may be used to support the release film 11 of the material tray assembly 1 in a 3D printing process, so as to provide a flat supporting surface for the printing material located between the release film 11 and the forming surface 82 of the forming platform 4 in the 3D printing process, thereby improving the flatness of the cured layer. Specifically, the support member 21 may be made of a transparent material or at least partially transparent material so as to allow light to pass through the support member 21 and the release film 11 to cure the printing material in the material tray assembly 1.

The auxiliary members 84 may further provide auxiliary support for the release film 11, thereby allowing a certain spacing to be formed between the release film 11 and the support member 21, i.e., the gas chamber 100. Specifically, the number of auxiliary members 84 may be one or more; and when the number of the auxiliary members 84 is more than one, the auxiliary members 84 may be provided at intervals on one side of the support member 21. Further, the auxiliary members 84 may be provided at the peripheral portion of the support member 21. Certainly, in some embodiments, they may also be provided at the central portion of the support member 21, or partially provided at the peripheral portion and partially provided at the central portion. The specific arrangement may be determined based on actual requirements and is not particularly limited herein.

It should be noted that, during the 3D printing process, the forming process of each cured layer may include the following steps: the forming platform 4 presses down to expel the liquid, the light source irradiates the printing material to cure it, and the forming platform 4 rises to separate the cured layer from the release film 11. After the forming platform 4 presses down, the release film 11 tends to adhere to the support surface on the side of the support member 21 facing the release film 11, forming a vacuum adsorption and causing that they are difficult to be separated. As a result, during the separating process as the forming platform 4 rises to separate the printed object from the release film 11, the release film 11 may exert a significant pulling force on the printed object, which can lead to printing failure or poor surface quality of the printed object.

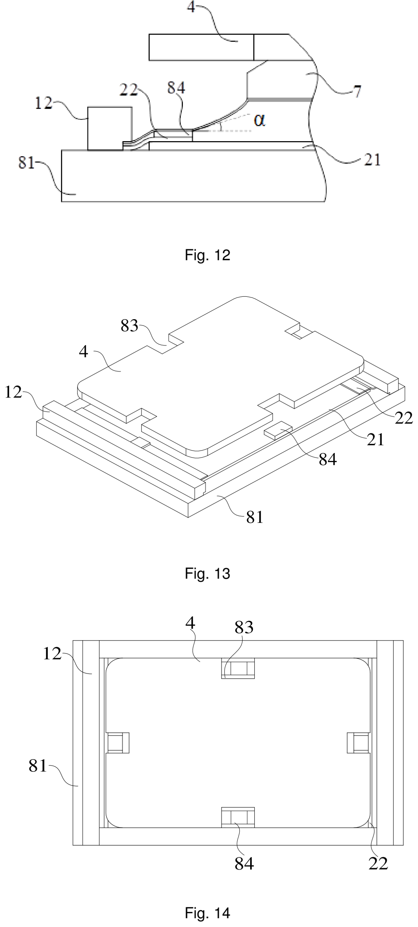

In this embodiment, by further providing the auxiliary members 84 on the support member 21 to form the gas chamber 100 between the release film 11 and the support member 21. Even when the forming platform 4 presses down to form the adhesion between the release film 11 and the support member 21 by vacuum adsorption, the gas chamber 100 still exists between the support member 21 and the release film 11 due to the auxiliary member 84. When the forming platform 4 rises to separate the printed object 7 from the release film 11, the release film 11 is driven to move in a direction away from the support member 21, and a separating angle α is formed between the release film 11 and the support member 21 due to the presence of the gas chamber, as shown in Fig. 12. It should be noted that the presence of the separating angle α can reduce the difficulty of breaking the vacuum environment between the release film 11 and the support member 21 when the release film 11 is pulled; and thus it is easier to separate the release film 11 from the support member 21. This significantly reduces the separating force between the release film 11 and the printed object 7 during the rising and separating process of the forming platform 4. As a result, the printed object 7 can be more easily separated from the release film 11, thereby improving the printing success rate and efficiency, reducing the risk of the printed object 7 falling off the forming platform 4 during the rising and separating process, and improving the quality of the printed object 7.

In one embodiment, the number of the auxiliary members 84 is at least two, and they are distributed along the circumferential direction of the release film 11. Specifically, the number of the auxiliary members 84 may be two, three, five, ten, or the like, and they may be evenly distributed around the gas chamber 100, or may be randomly distributed.

In one embodiment, the auxiliary members 84 may be configured to allow forming a gas chamber 100 with a consistent height between the support member 21 and the release film 11. It should be noted that the situation where the forming platform 4 is not pressing down on the release film 11.

Further, the height of the gas chamber 100 may be 0.2-0.3 mm, specifically, 0.2 mm, 0.22 mm, 0.24 mm, 0.26 mm, 0.28 mm, 0.3 mm, etc. The control of the height can effectively reduce the separating force between the printed object and the release film 11.

In one application scenario, supplying gas into the gas chamber 100 can assist in breaking the vacuum adsorption between the release film 11 and the support member 21 during the rising process of the forming platform 4, such that the release film 11 can be separated from the support member 21 more easily.

It should be noted that, consistent height herein may refer to consistency within a certain error range, and is not limited to strict consistency. Certainly, in another embodiment, a gas chamber with uneven height may also be formed between the support member 21 and the release film 11, as long as the described requirement for easy separating can be met, which is not limited herein.

In one embodiment, four auxiliary members 84 are respectively provided corresponding to four corners of the support member 21, as shown in Figs. 7-11.

In one embodiment, four auxiliary members 84 are respectively provided corresponding to four sides of the support member 21, as shown in Figs. 13-15. The auxiliary members 84 may each be positioned at the central position of the corresponding side, or at other positions.

In one embodiment, the arrangement of the auxiliary members 84 may be configured according to the shape of the support member 21, such as circular, polygonal, irregular shapes or the like. In one application scenario, the shape may be circular, and in this case, the auxiliary members 84 may be provided in the circumferential direction of the support member 21. In another application scenario, the shape may be polygonal, and in this case, the auxiliary members 84 may be provided corresponding to the corners of the polygon, or may also be provided corresponding to the sides of the polygon, which is not specifically limited herein.

In one embodiment, the auxiliary members 84 may be any of tape, plastic sheet, metal gasket, foam, wooden sheet, fiber cloth, or a combination of. Other types of materials may be suitable.

In one embodiment, the auxiliary members 84 may be tape so as to be adhered to the support member 21. The thickness of the tape is 0.1-0.3 mm, specifically, 0.1 mm, 0.15 mm, 0.2 mm, 0.25 mm, 0.3 mm, etc. Certainly, in some application scenarios, the tape may also be adhered to the release film 11.

Further, the tape may be composed of a base material and an adhesive layer, and may be single-sided tape, double-sided tape, or without adhesive. The base material of the tape can be made of cast polypropylene film (CPP), oriented polypropylene film (OPP), biaxially oriented polypropylene film (BOPP), polyethylene (PE), monoaxially oriented polypropylene film (MOPP), polyvinyl chloride (PVC), polyethylene terephthalate (PET), Teflon, Teflon fiberglass cloth, acetate cloth, cloth base, foam, metal foil, masking paper, or the like. The adhesive layer may be made of water-based adhesive, oil-based adhesive, hot melt adhesive, natural rubber, synthetic rubber, and the like, which is not specifically limited herein.

In some embodiments, the pulsing gas supply assembly 3 further includes a control valve to control the intermittent entry of gas into the gas chamber 100. By providing a control valve, it is convenient to control the entry of gas into the gas chamber, allowing for intermittent gas supply, such as oscillating gas, according to requirements. Certainly, gas may also be supplied continuously, or gas may be supplied continuously for a period and supplied intermittently for another period according to requirements, which is not limited herein, and a person skilled in the art may set it according to according to process strategies or other requirements.

In some embodiments, the support member is a transparent rigid support member 21a or a transparent flexible support member 21b. When the support member 21 is a transparent flexible support member 21b, a gas chamber 100 is formed between the release film 11 and the transparent flexible support member 21b. Auxiliary members may be provided on the flexible support member 21b to support the release film 11, better ensuring that the gas chamber 100 maintains the preset height (thickness), as shown in Fig. 8. The auxiliary members 84 may be provided on one side of the support member 21 facing the release film 11, such that when the release film 11 adhered to the support member 21 has a tendency to move in a direction away from the support member 21, separating angle is provided between the release film 11 and the support member 21.

In some embodiments, the support assembly 2 further includes a rigid substrate 23 provided below the transparent flexible support member 21b, so as to provide support, ensuring consistency of the release film 11 during printing, and providing a stable forming surface, as shown in Fig. 7. The rigid substrate may be a glass support plate, a plastic support plate, or the like, and may also be a display screen, such as an LCD screen, a Micro-LED screen, a Mini-LED screen, an OLED screen, or the like, which is not specifically limited herein.

In some embodiments, the support member 21 and the rigid substrate 23 have a third preset distance therebetween in the height direction, and in an initial state, the release film 11, the transparent flexible support member 21b and the transparent rigid substrate 23 are all in a separated state. When the forming platform 4 and the printed object 7 press down on the release film 11, the bottom surface of the release film 11 comes into contact with the upper surface of the transparent flexible support member 21b, and the bottom surface of the transparent flexible support member 21b comes into contact with the upper surface of the rigid substrate 23, such that the transparent rigid substrate 23 can be used to provide a stable forming surface for exposure curing. During separating, a pulsing air enters between the release film 11 and the transparent flexible support member 21b, causing both the release film 11 and the transparent flexible support member 21b to undergo high-frequency oscillations in opposite directions. This intensifies the volume change of the gas in the gas chamber 100 while reducing the required inlet pressure, mitigating the impact of excessive oscillation amplitude of the release film 11 on the forming quality of the separating surface of the solid polymer (i.e., the printed object 7). As a result, the vacuum adsorption effect formed by the adhesion between the release film 11 and the underlying transparent flexible support member 21b can be rapidly broken. Additionally, the oscillation causes separation between the transparent flexible support member 21b and the transparent rigid substrate 23, which does not affect the separating of the printed object 7.

It should be noted that, the third preset distance is smaller than the first preset distance, so as to prevent excessive spacing between between the release film 11 and the rigid substrate 23, which could affect the forming accuracy. In order to maintain the third preset distance between the transparent flexible support 21b and the rigid substrate 23, a connecting member 24 with a thickness is provided along the circumferential direction of the transparent rigid substrate 23, as shown in Fig. 7.

As the release film 11 and the transparent flexible support member 21b are required to withstand repeated pressing and separating, in some embodiments of the present disclosure, the release film 11 and the transparent flexible support member 21b are made of fluoropolymer films. As fluoropolymer films have good mechanical strength, they can withstand repeated pressing and separating of the forming platform 4. In addition, fluoropolymer films also have advantages such as good chemical stability and good thermal stability, making them suitable for 3D printing. In some embodiments, the fluoropolymer film includes the following types: FEP (fluorinated ethylene propylene) film, PTFE (polytetrafluoroethylene) film, nFEP film (a film made from a copolymer of FEP resin and PTFE resin), PFA (perfluoroalkoxy) film, PVDF (polyvinylidene fluoride) film, PVF (polyvinyl fluoride) film, ETFE (ethylene-tetrafluoroethylene copolymer) film, etc.

In some embodiments, the transparent flexible support member 21b may also be a polydimethylsiloxane (PDMS) film or a polymethylpentene (PMP) film, both of which have the advantage of high transparency and will not affect exposure curing of the printed object 7. Specifically, the PDMS film has high elasticity and resilience, and also has excellent weather and temperature resistance (-60 to 200°C). The PMP film has a very low surface tension of only 24 mN/m, which is even lower than that of some fluorine resins. Compared with other materials, the PMP film has excellent separatability; and thus it is easier to separate the release film 11 from the transparent flexible support 21b.

In one embodiment, the support 21 may be rigid, such as a rigid support plate. Specific examples include a glass support plate, a plastic support plate, or the like, and may also be a display screen, such as an LCD screen, a Micro-LED screen, a Mini-LED screen, an OLED screen, or the like, which is not specifically limited herein.

In some embodiments, the support member 21 is made of one or a combination of several of a fluoropolymer film, a polydimethylsiloxane film, a polymethylpentene film, an acrylic adhesive, polymethyl methacrylate, polytetrafluoroethylene, polyethylene terephthalate, a fluoroethylene-vinyl copolymer, polyethylene, polypropylene, polyvinyl chloride, a photosensitive resin, a thermosensitive resin, glass, and a display screen.

In the described embodiments, the pulsing release module (PRM) provided in the present disclosure can inject pulsing air (PA) into the gas chamber at the bottom of the material tray, thereby generating a pulsed separating effect during the separating of the printed object 7. When the bottom layer of the printed object 7 is separated from the release film 11, the release film 11 undergoes high-frequency vibration under the action of the pulsing air, which can rapidly break the vacuum adsorption state between the release film 11 and the support member 21, eliminating the vacuum adsorption force, reducing the separating force during releasing, and preventing sudden changes in separating force during the separation of the release film 11 from the support member 21. After the release film 11 is separated from the support member 21, the release film 11 continues to undergo physical oscillation under the action of the pulsing air. During the releasing process, line separating from the edge to the center is achieved, thereby realizing a side-separating effect. This significantly reduces the separating force, enhances the release success rate of the printed object 7 for that layer, improves printing efficiency and overall printing success rate, and reduces the risk of print detachment.

Please refer to Figs. 1 to 18, a second aspect of the embodiments of the present disclosure provides a pulsing release material tray, including a release film 11 and a support member 21. The support member 21 and the release film 11 have a second preset distance therebetween in the height direction, so as to form a gas chamber 100 between the support member 21 and the release film 11. The support member 21 is respectively provided with a gas inlet 211 and a gas outlet 212 in communication with the gas chamber 100, and the gas inlet 211 and the gas outlet 212 are used to connect to the pulsing gas supply assembly 3. The pulsing gas supply assembly 3 inputs a pulsing air into the gas chamber through the gas inlet 211, such that the gas volume in the gas chamber 100 changes periodically, thereby causing the release film 11 to oscillate periodically. Thus, when the printed object 7 is separated from the release film 11, the release film 11 oscillates in a wave-like manner during the separating process, which can rapidly break the vacuum adsorption state between the release film 11 and the support member 21. In addition, it also enables the bottom surface of the printing member 7 and the release film 11 to reach the separating angle threshold within a shorter separating stroke, which is beneficial to reducing the separating force and separating stroke, improving the printing efficiency and printing success rate, and lowering the risk of print detachment.

In some embodiments, the pulsing release material tray can be the material tray assembly according to the first aspect of the embodiments of the present disclosure, and the second preset distance can be equal to the first preset distance.

In some embodiments, the support assembly 2 may include a support member 21 and auxiliary members 84. The support members 21 may be provided on one side of the material tray assembly 1, specifically on the side of the material tray assembly 1 away from the forming platform 4. The auxiliary members 84 may be provided on one side of the support member 21 facing the release film 11, such that when the release film 11 is adhered to the support member 21 and has a tendency to move in a direction away from the support member 21, separating angle is provided between the release film 11 and the support member 21.

The material tray assembly 1 in this embodiment may be a material tray assembly 1 of a tightened film structure. Specifically, the material tray assembly 1 can further include a material tray main body 12 connected with the outer periphery of the release film 11. The release film 11 is connected with the material tray main body 12 in a tightened state, such that one end of the material tray main body 12 is in a closed state, and thus the material tray assembly 1 can be used to hold a printing material.

Further, the support members 21 may be used to support the release film 11 of the material tray assembly 1 in a 3D printing process, so as to provide a flat supporting surface for the printing material located between the release film 11 and the forming surface 82 of the forming platform 4 in the 3D printing process, thereby improving the flatness of the cured layer. Specifically, the support member 21 may be made of a transparent material or at least partially transparent material so as to allow light to pass through the support member 21 and and the release film 11 to cure the printing material in the material tray assembly 1.

The auxiliary members 84 may further provide auxiliary support for the release film 11, thereby allowing a certain spacing to be formed between the release film 11 and the support member 21, i.e., the gas chamber 100. Specifically, the number of auxiliary members 84 may be one or more; and when the number of the auxiliary members 84 is more than one, the auxiliary members 84 may be provided at intervals on one side of the support member 21. Further, the auxiliary members 84 may be provided at the peripheral portion of the support member 21. Certainly, in some embodiments, they may also be provided at the central portion of the support member 21, or partially provided at the peripheral portion and partially provided at the central portion. The specific arrangement may be determined based on actual requirements and is not particularly limited herein.

It should be noted that, during the 3D printing process, the forming process of each cured layer may include the following steps: the forming platform 4 presses down to expel the liquid, the light source irradiates the printing material to cure it, and the forming platform 4 rises to separate the cured layer from the release film 11. After the forming platform 4 presses down, the release film 11 tends to adhere to the support surface on the side of the support member 21 facing the release film 11, forming a vacuum adsorption that is difficult to separate. As a result, during the separating process as the forming platform 4 rises to separate the printed object from the release film 11, the release film 11 may exert a significant pulling force on the printed object, which can lead to printing failure or poor surface quality of the printed object.

In this embodiment, by further providing the auxiliary members 84 on the support member 21 to form the gas chamber 100 between the release film 11 and the support member 21, even when the forming platform 4 presses down to form the adhesion between the release film 11 and the support member 21 by vacuum adsorption, as the auxiliary member 84 also forms the gas chamber 100 between the support member 21 and the release film 11, when the forming platform 4 rises to separate the printed object 7 from the release film 11, the release film 11 is driven to move in a direction away from the support member 21. At this point, due to the presence of the gas chamber, a separating angle α is formed between the release film 11 and the support member 21, as shown in Fig. 12. It should be noted that the presence of the separating angle α can reduce the difficulty of breaking the vacuum environment between the release film 11 and the support member 21 when the release film 11 is pulled; and thus it is easier to separate the release film 11 from the support member 21. This significantly reduces the separating force between the release film 11 and the printed object 7 during the rising and separating process of the forming platform 4. As a result, the printed object 7 can be more easily separated from the release film 11, thereby improving the printing success rate and efficiency, reducing the risk of the printed object 7 falling off the forming platform 4 during the rising and separating process, and enhancing the quality of the printed object 7.

In one embodiment, the number of the auxiliary members 84 is at least two, and they are distributed along the circumferential direction of the release film 11. Specifically, the number of the auxiliary members 84 may be two, three, five, ten, or the like, and they may be evenly distributed around the gas chamber 100, or may be randomly distributed.

In one embodiment, the auxiliary members 84 may be configured to form a gas chamber 100 with a consistent height between the support member 21 and the release film 11. It should be noted that the the situation where the forming platform 4 is not pressing down on the release film 11.

Further, the height of the gas chamber 100 may be 0.2-0.3 mm, specifically, 0.2 mm, 0.22 mm, 0.24 mm, 0.26 mm, 0.28 mm, 0.3 mm, etc. The control of the height can effectively reduce the separating force between the printed object and the release film 11.

In this way, a ventilation design can be further carried out to provide gas, such as at least one of oxygen, nitrogen, or an inert gas, between the release film 11 and the support 21 according to actual requirements.

In one application scenario, supplying gas into the gas chamber 100 can assist in breaking the vacuum adsorption between the release film 11 and the support member 21 during the rising process of the forming platform 4, such that the release film 11 can be separated from the support member 21 more easily.

It should be noted that, consistent height herein may refer to consistency within a certain error range, and is not limited to strict consistency. Certainly, in another embodiment, a gas chamber with uneven height may also be formed between the support member 21 and the release film 11, as long as the described requirement for easy separating can be met, which is not limited herein.

In one embodiment, four auxiliary members 84 are respectively provided corresponding to four corners of the support member 21, as shown in Figs. 7-11.

In one embodiment, four auxiliary members 84 are respectively provided corresponding to four sides of the support member 21, as shown in Figs. 13-15. The auxiliary members 84 may each be positioned at the central position of the corresponding side, or at other positions.

In one embodiment, the arrangement of the auxiliary members 84 may be configured according to the shape of the support member 21, such as circular, polygonal, irregular shapes or the like. In one application scenario, the shape may be circular, and in this case, the auxiliary members 84 may be provided around the circumferential direction of the support member 21. In another application scenario, the shape may be polygonal, and in this case, the auxiliary members 84 may be provided corresponding to the corners of the polygon, or may also be provided corresponding to the sides of the polygon, which is not specifically limited herein.

In one embodiment, the auxiliary member 84 is made of any of tape, plastic sheet, metal gasket, foam, wooden sheet, fiber cloth, or the like, or a combination thereof, or may be other types of suitable materials.

In one embodiment, the auxiliary members 84 may be tape so as to be adhered to the support member 21. The thickness of the tape is 0.1-0.3 mm, specifically, 0.1 mm, 0.15 mm, 0.2 mm, 0.25 mm, 0.3 mm, etc. Certainly, in some application scenarios, the tape may also be adhered to the release film 11.

Further, the tape may be composed of a base material and an adhesive layer, and may be single-sided tape, double-sided tape, or without adhesive. The base material of the tape can be made of cast polypropylene film (CPP), oriented polypropylene film (OPP), biaxially oriented polypropylene film (BOPP), polyethylene (PE), monoaxially oriented polypropylene film (MOPP), polyvinyl chloride (PVC), polyethylene terephthalate (PET), Teflon, Teflon fiberglass cloth, acetate cloth, cloth base, foam, metal foil, masking paper, or the like. The adhesive layer may be made of water-based adhesive, oil-based adhesive, hot melt adhesive, natural rubber, synthetic rubber, and the like, which is not specifically limited herein.

In some embodiments, the support assembly 2 further includes a rigid substrate 23 provided below the transparent flexible support member 21b. The rigid substrate may be a glass support plate, a plastic support plate, or the like, and may also be a display screen, such as an LCD screen, a Micro-LED screen, a Mini-LED screen, an OLED screen, or the like, which is not specifically limited herein. This provides support, ensuring consistency of the release film (11) during printing, and providing a stable forming surface, as shown in Fig. 7.

In some embodiments, the transparent flexible support member 21b is made of a fluoropolymer film, a polydimethylsiloxane film, or a polymethylpentene film. In some embodiments, the fluoropolymer film includes the following types: FEP (fluorinated ethylene propylene) film, PTFE (polytetrafluoroethylene) film, nFEP film (a film made from a copolymer of FEP resin and PTFE resin), PFA (perfluoroalkoxy) film, PVDF (polyvinylidene fluoride) film, PVF (polyvinyl fluoride) film, ETFE (ethylene-tetrafluoroethylene copolymer) film, etc.

In some embodiments, the transparent flexible support member 21b may also be a polydimethylsiloxane (PDMS) film or a polymethylpentene (PMP) film, both of which have the advantage of high transparency and will not affect exposure curing of the printed object 7. Specifically, the PDMS film has high elasticity and resilience, and also has excellent weather and temperature resistance (-60 to 200°C). The PMP film has a very low surface tension of only 24 mN/m, which is even lower than that of some fluorine resins. Compared with other materials, the PMP film has excellent separatability; and thus it is easier to separate the release film 11 from the transparent flexible support 21b.

In some embodiments, the transparent flexible support member 21b is any of: a combination of a fluoropolymer film, a polydimethylsiloxane film, a polymethylpentene film, an acrylic adhesive, polymethyl methacrylate, polytetrafluoroethylene, polyethylene terephthalate, a fluoroethylene-vinyl copolymer, polyethylene, polypropylene, polyvinyl chloride, a photosensitive resin, and a thermosensitive resin.

In the described embodiments, according to the pulsing release material tray (PRRT) provided in the present disclosure, the pulsing gas supply assembly 3 inputs a pulsing air into the gas chamber through the gas inlet 211, such that the gas volume in the gas chamber 100 changes periodically, thereby causing the release film 11 to oscillate periodically. Thus, when the printed object 7 is separated from the release film 11, the release film 11 oscillates in a wave-like manner during the separating process, which can rapidly break the vacuum adsorption state between the release film 11 and the support member 21. In addition, it also enables the bottom surface of the printing member 7 and the release film 11 to reach the separating angle threshold within a shorter separating stroke d, which is beneficial to reducing the separating force and separating stroke, improving the printing efficiency and printing success rate, and lowering the risk of print detachment.

A third aspect of the embodiments of the present disclosure provides a 3D printing device. Referring to Figs. 1 to 18, the 3D printing device includes the pulsing release module in the described embodiments or the pulsing release material tray provided in the second aspect of the present disclosure, and further includes a forming platform 4, an optical engine 5 and a control system 6. The forming platform 4 is provided above the material tray assembly 1, and is configured to drive the printed object 7 to move in the vertical direction, so as to achieve the forming and separating of the printed object 7. The optical engine 5 is provided below the support assembly 2 and is configured to emit light through the support member 21 to achieve the exposure curing of the bottom layer of the printed object 7. The control system 6 is respectively associated with the forming platform 4, the optical engine 5 and the pulsing gas supply assembly 3, and is configured to send control signals to the components. In this embodiment, the association of the control system 6 with the forming platform 4, the optical machine 5, and the pulsing gas supply assembly 3 includes, but is not limited to, connection, physical connection, and communication connection, as long as it enables the components to interact, communicate, or exchange data information.

In some embodiments of the present disclosure, the control system 6 communicates with the pulsing gas supply assembly 3 to generate control instructions according to a preconfigured control strategy and send the control instructions to the pulsing gas supply assembly 3.

In the embodiments of the present disclosure, the control instructions generated by the control system 6 according to a preconfigured control strategy may also be used to control the pulsing gas supply assembly 3 to increase or decrease the amount of gas delivered. For example, the control strategy is configured as follows: when one or more of the following are detected: the release film of the 3D printing device is higher than a preset marking position, the gas pressure of the gas in the 3D printing device is higher than a preset gas pressure range, the gas flow of the gas in the 3D printing device is higher than a preset range, the concentration of the gas in the 3D printing device is higher than a preset concentration range, or the force borne by the lower surface of the release film of the 3D printing device is greater than the force borne by the upper surface, it indicates that the pulsing gas supply assembly 3 has delivered excessive gas to the 3D printing device. In this case, it is necessary to adjust the gas pressure and concentration of the gas in the 3D printing device. Thus, the control strategy at this time is to generate and send a first control instruction, wherein the first control instruction includes controlling the pulsing gas supply assembly 3 to decrease the amount of gas delivered.

When one or more of the following are detected: the release film of the 3D printing device is lower than a preset marking position, the gas pressure of the gas in the 3D printing device is lower than a preset gas pressure range, the gas flow of the gas in the 3D printing device is lower than a preset range, the concentration of the gas in the 3D printing device is lower than a preset concentration range, and the force borne by the upper surface of the release film of the 3D printing device is less than the force borne by the lower surface, it indicates that the pulsing gas supply assembly 3 has transferred insufficient gas to the 3D printing device. This may affect the curing effect of the resin material, making it difficult to separate from the material tray; and it is necessary to adjust the gas pressure and concentration in the 3D printing device. Thus, the control strategy at this time is to generate and send a second control instruction, wherein the second control instruction includes controlling the pulsing gas supply assembly 3 to increase the amount of gas delivered.

It should be noted that the height of the release film 11, the gas pressure, gas flow and concentration of the gas, and force borne by the lower surface of the release film 11 may be directly acquired based on corresponding sensors, and may also be acquired by performing data processing based on data acquired by the sensors. For example, in order to obtain the force borne by the upper surface of the release film 11 of the 3D printing device, the volume of the printing material can be measured and converted into weight to determine the force borne by the surface of the release film 11. By providing a weighing sensor at the bottom of the material tray to measure the total weight of the material tray and the printing material, the force borne by the surface of the release film 11 can be determined, reflecting the balance between the action force on the upper surface and the reaction force on the lower surface of the film.

Accordingly, in one embodiment, the forming platform 4 has clearance designs 83 to bypass the auxiliary members 84. The clearance designs 83 can prevent the forming platform 4 from pressing on the auxiliary members 84 when the forming platform 4 presses down during the 3D printing process. It should be noted that, if the forming platform 4 presses on the auxiliary members 84, the initial printed layer may become excessively thick due to the thickness of the auxiliary member(s) 84, which may result in printing failures such as the printed object detaching from the forming platform 4.

In one embodiment, the clearance designs 83 includes at least one of clearance chamfers, clearance slots, etc. Specifically, the positions of the forming platform 4 corresponding to the auxiliary members 84 may be cut off directly; or recessed structures may be provided on the positions of the forming platform 4 corresponding to the auxiliary members 84 to accommodate the corresponding auxiliary members 84.

Specifically, as in the embodiments shown in Figs. 7 to 11, the forming platform 4 is provided with clearance chamfers at the positions corresponding to the auxiliary members 84, respectively. According to the embodiments shown in Figs. 13 to 15, corresponding clearance slots are respectively provided on the periphery of the forming platform 4 to stagger with the auxiliary members 84 when the forming platform 4 presses down. Similarly, the embodiments of Figs. 6 to 8 in the present disclosure may also adopt similar clearance designs.

In the 3D printing device provided in the embodiments of the present disclosure, the pulsing release module can be controlled as an independent module. When pulse separating is required, the control system 6 only needs to send an action signal to the gas oscillation component 31, which will cause the gas transfer pipeline 32 to output a pulsing air with a predetermined pulse frequency and output pressure, forming a closed-loop control system. The gas flow pipeline configuration and control method are simple. The pulsing release module can also be a part of the 3D printing device, controlled by the control system of the 3D printing device.

In some embodiments, the support assembly 2 is provided on a base 81 that is part of the housing of the 3D printing device.

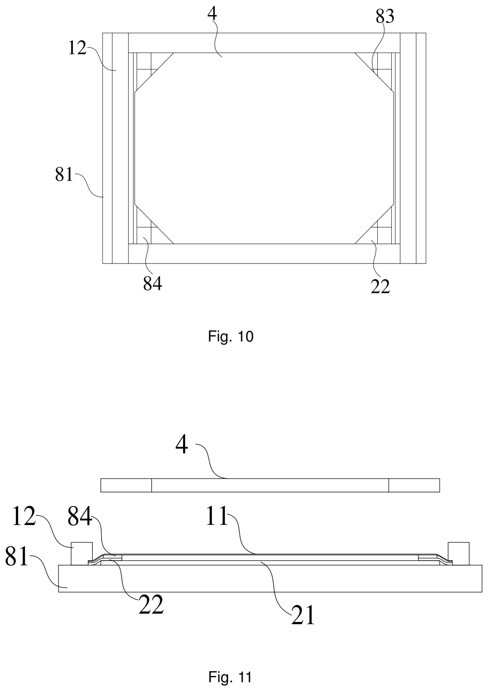

A fourth aspect of the embodiments of the present disclosure provides a 3D printing method. Referring to Fig. 10, the 3D printing device in the described embodiments is used, and the method includes the following steps:
step 1: a collection of slice images corresponding to a three-dimensional model to be printed is acquired, and a printing difficulty value corresponding to each slice image layer is calculated.

Specifically, a three-dimensional model of a printed object 7 is input into a computer; a control system 6 installed in the computer acquires a collection of slice images corresponding to the printed object 7; and based on cross-sectional information corresponding to the slice image, a printing difficulty value corresponding to each slice image layer is calculated. The method for determining the printing difficulty value can refer to the Chinese patent application document with application no. 202310235431.5.

Step 2: on the basis of the printing difficulty value, printing parameters and pulsing air parameters corresponding to each slice image layer are determined.

Specifically, the determination of the printing parameters can refer to the Chinese patent application document with application no. 202310235431.5. The pulsing air parameters include pulse frequency and output gas pressure, wherein the pulse frequency is directly proportional to the printing difficulty value, that is the greater the printing difficulty level value is, the higher the pulse frequency is. This is because when the printing difficulty value is greater, it usually indicates that the cross-section of the printed object 7 at that layer contains a greater number of features or smaller minimum spacing between features, which requires more precise printing and separating. A higher pulse frequency results in more rapid oscillation of the release film 11 with a larger amplitude, enabling the release film 11 and the bottom layer of the printed object 7 to more quickly reach the separating angle threshold θ. This reduces the separating force while improving separating efficiency. Preferably, the range of the pulse frequency is 0.1 Hz-50000 Hz.

The output gas pressure is directly proportional to the volume of the gas chamber. When the volume of the gas chamber is relatively small, an excessively high output pressure may cause the release film 11 to bulge, which is not conducive to its oscillation. Conversely, when the volume of the gas chamber is large, an excessively low output pressure may result in insignificant oscillation of the release film 11. Preferably, the range of the output gas pressure is 0.1 Pa-100000 Pa.

Step 3: a model printing operation corresponding to each slice image layer is determined on the basis of the printing parameters, and a model separating operation corresponding to each slice image layer is determined on the basis of the pulsing air parameters.

Specifically, a liquid photosensitive resin material is held in a material tank formed by the enclosure of the release film 11 and the material tray main body 12. After printing begins, the forming platform 4 moves up and down to achieve layer-by-layer printing of the printed object 7. When printing the nth layer, the forming platform 4 presses down to bring the bottom of the printing component 7 into contact with the liquid photosensitive resin material in the material tray. The optical machine 5 performs exposure curing according to the cross-sectional shape of the slice image corresponding to that layer. After the exposure is completed, the control system 6 communicates with the gas oscillation component to transfer a pulsing air to the interior of the gas chamber to break the vacuum adsorption state between the release film 11 and the support member 21. After the release film 11 is separated from the support member 21, the pulsing air induces oscillation in the release film 11. The forming platform 4 rises, initiating the separating operation between the printed object 7 and the release film 11. During model separating, a pulsing air is introduced into the gas inlet 211 at a pulse frequency, such that the volume of the gas chamber is periodically changed, wherein the frequency of these changes is approximately equal to the pulse frequency, thereby causing the release film 11 to oscillate periodically. The frequency and amplitude of this oscillation are related to the control signal sent by the control system 6 to the gas oscillation component 31. As a result, the release film 11 and the bottom layer of the printed object 7 can more quickly reach the separating angle threshold θ, as shown in Fig. 5, significantly reducing the separating force and separating stroke.

After the separating is completed, the forming platform 4 returns to its zero position, the pulsing air stops or weakens, and the oscillation of the release film 11 stops or diminishes. At this point, the printing of the next layer (i. e. the (n+1)th layer) can begin.

In order to verify the separating effect of the pulsing release module provided in the embodiments of the present disclosure, the inventors applied the pulsing release module provided in the present disclosure to a Reflex printer of HeyGears, performed 3D printing by using a PAU10 material of HeyGears, and provided the following verification examples:
verification embodiment 1: printing a cantilever beam model and a bridge model, which can be used to evaluate the effectiveness of pulse separating and its impact on reducing support density. As the cantilever beam model includes a cantilever beam extending to one side, during separating, if the separating force is excessive, it may cause the cantilever to bend, resulting in a limited cantilever span. When a 3D printing device in the prior art is used for printing, the forming span is typically 1.2 mm. Similarly, the bridge model, which has a large span between two support points, may experience bending in the middle beam if the separating force is excessive. In order to avoid this problem, it is often necessary to increase the support density. When a 3D printing device of the prior art is used for printing with a PAU10 material, the span between the two support points is only 2.6 mm.

When a Reflex printer equipped with a pulsing release module is used for printing, the reduced separating force improves the effectiveness of separating in pulse separating mode. As a result, the forming span of a single cantilever beam increases from 1.2 mm to 1.6 mm, and the forming span of a bridge model increases from 2.6 mm to 3.4 mm. The equivalent calculated support density can be reduced by 20%.

Verification embodiment 2: a miniature model is printed to evaluate the improvement in printing success rate for small parts enabled by the pulse separating and the optimization effects on separating force and printing time. As the size of the miniature model is small, it is difficult in both printing and separating. When a 3D printing device in the prior art is used for printing, some details may fail to be printed completely.

When a Reflex printer equipped with a pulsing release module is used for printing, a miniature model can be printed completely, the separating force during printing is reduced by 20-50%, and the printing time is shortened by 40%.

Verification embodiment 3: a detail-forming test model is printed to evaluate the optimization of pulse separating for detail forming. As the detail-forming test model has a relatively small cross section, when a 3D printing device in the prior art is used for printing, the separating state allows complete forming of a cylinder with a 0.6 mm diameter and 10 mm height, but fine features with a precision of 0.1 mm may not be fully formed.

When a Reflex printer equipped with a pulsing release module is used for printing, a cylinder with a diameter of 0.3 mm and a height of 10 mm can be completely formed, and the minimum feature size achieved is less than 0.08 mm.

Verification embodiment 4: a long-duration endurance test part can be printed to evaluate the optimization of pulse separating for the service life of the material tray.

When a Reflex printer equipped with a pulsing release module is used for printing, the surface quality of the separated printed object 7 shows no abnormalities. Compared with material trays in the prior art, as the release force of the release film 11 in the present disclosure is significantly reduced, the service life of the release film 11 can be increased by 27%-38%.

Verification embodiment 5: a separating stroke test part is printed to evaluate the optimization of pulse separating for the separating stroke. Please refer to Figs. 4 and 5. When a 3D printing device in the prior art is used for printing, the release film 11 in the material tray assembly 1 undergoes elastic deformation under the pulling force from the bottom layer of the printed object 7, until the bottom layer of the print 7 and the release film 11 reach the separating angle threshold θ, as shown in Fig. 4. In this case, the separating stroke is relatively long.

When a Reflex printer equipped with a pulsing release module is used for printing, as the release film 11 may undergo high-frequency oscillation under the action of the pulsing air, enabling the bottom layer of the printed object 7 and the release film 11 to more quickly reach the separating angle threshold θ, as shown in Fig. 5. This reduces the separating stroke by 32%-47%, which is beneficial to improving separating efficiency.

It can be determined from the described embodiments that, the pulsing release module and the pulsing release material tray provided in the embodiments of the present disclosure can significantly reduce the separating force during the separating process, which is beneficial to improve the forming accuracy of a model, enhance the effectiveness of pulse separating, and extend the service life of the release film 11. By reducing the separating stroke, the separating time can be significantly shortened, thereby improving separating efficiency and reducing overall printing time.

The present disclosure provides a three-dimensional printing system, including: a material tray assembly, having a release film that is at least partially transparent; a support assembly, having a support member that is at least partially transparent, wherein a gas chamber is formed between the support member and the release film, and the gas chamber is in communication with a gas inlet and a gas outlet; and a gas supply assembly, configured to transfer gas to the gas chamber, and configured to cause the volume of the gas chamber to change periodically.

In some embodiments, the support member and the release film define a gas chamber. In other embodiments, the support member, the release film and a sealing member define a gas chamber. It can be understood that, when the forming platform drives the release film to move close to the support member, a vacuum is formed between the release film and the support member, which is not conducive to the subsequent separation of the forming platform (and the release film adhered to the forming platform) from the support member. The gas supplied by the gas supply assembly may be directed into the gas chamber to at least partially eliminate the vacuum, thereby facilitating the separation of the release film from the support member.

To facilitate the separation of the forming platform (or the object cured thereon) from the release film, the gas chamber of the present disclosure has a varying volume or capacity during the separating process (i. e., the process in which the forming platform moves away from the release film or away from the support member). The continuous or periodic change in the volume or capacity of the gas chamber may cause the gas pressure within the gas chamber to increase or decrease. During the gas pressure decrease, the release film will experience a force tending to move the release film closer to the support member, while the cured object on the forming platform remains subjected to a force tending to move the cured object away from the support member. As a result, the cured object on the forming platform can be more easily separated from the release film.

It can be understood that, during the separating process, as the forming platform moves away from the release film or away from the support member, the extent of elongation of the release film will increase. After a predetermined separating stroke, the separating force between the cured object on the forming platform and the release film reaches a predetermined separating force, such that the cured object on the forming platform is separated from the release film. As a pulsing air (or a continuous change or periodic change in volume or capacity of the gas chamber) is provided, the separating force between the cured object on the forming platform and the release film reaches a predetermined separating force at a distance shorter than a predetermined separating stroke, such that the cured object on the forming platform is separated from the release film. This reduces the overall separating stroke, allowing the forming platform to move at a faster speed after separating, thereby shortening the total printing time.

In some embodiments, the gas supply assembly intermittently transfers gas to the gas chamber, i.e., operating for a period and stopping for a period. For example, it may operate for 1 s and stop for 0.5 s.

In some embodiments, the gas supply assembly transfers gas to the gas chamber at different flow rates, and the gas in the gas chamber is discharged through the gas outlet at a constant flow rate. For example, the flow rate of gas discharged through the gas outlet is a, the flow rate of gas intake in a first time period is 1.2a, the flow rate of gas intake in a second time period thereafter is 1.5a, and the flow rate of gas intake in a third time period thereafter is 0.8a.

It should be understood that the terminology used herein is for the purpose of describing particular example embodiments only and is not intended to be limiting. As used herein, the singular forms "a", "an", and "the" may also be intended to include the plural forms as well, unless the context clearly indicates otherwise. The terms "comprising", "including", "containing", and "having" are inclusive and therefore specify the presence of stated features, steps, operations, elements, and/or components, but do not preclude the presence or addition of one or more other features, steps, operations, elements, components, and/or groups thereof. The method steps, processes, and operations described herein are not to be construed as necessarily requiring their performance in the particular order described or illustrated, unless the order of performance is explicitly indicated. It should also be understood that additional or alternative steps may be used.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first", "second", and other numerical terms when used herein do not imply a sequence or order unless clearly indicated by the context. Thus, a first element, component, region, layer or section discussed below could be termed a second element, component, region, layer or section without departing from the teachings of example embodiments.

The foregoing descriptions are merely specific implementations of the present disclosure, so that those skilled in the art can understand or implement the present disclosure. Various modifications to these embodiments will be readily apparent to those skilled in the art, and the general principles defined herein may be implemented in other embodiments without departing from the spirit or scope of the present disclosure. Accordingly, the present disclosure will not be limited to the embodiments shown herein but is to be accorded the widest scope consistent with the principles and novel features applied herein.

### Industrial Applicability

The solution provided in the embodiments of the present disclosure can be applied to the technical field of 3D printing. In the embodiments of the present disclosure, the pulsing release module provided includes a material tray assembly, a support assembly and a pulsing gas supply assembly, wherein the pulsing gas supply assembly inputs a pulsing air into the gas chamber, so that the volume of the gas in the gas chamber changes periodically, thereby causing the release film to oscillate periodically, which can rapidly break the vacuum adsorption state between the release film and the support member, being beneficial to reducing the separating force and separating stroke, improving the printing efficiency and printing success rate, and lowering the risk of print detachment. In the embodiments of the present disclosure, a pulsing release material tray provided includes a release film and a support member, and a gas chamber is formed between the support member and the release film; the support member is respectively provided with a gas inlet and a gas outlet in communication with the gas chamber, and is configured to connect to the pulsing gas supply assembly. In the embodiment of the present disclosure, a 3D printing device provided includes the described pulsing release module and the described pulsing release material tray. In the embodiments of the present disclosure, a 3D printing method provided includes the step of controlling the pulsing air, so that the release film oscillates periodically, which can rapidly break the vacuum adsorption state between the release film and the support member, being beneficial to reducing the separating force and separating stroke, improving the printing efficiency and printing success rate, and lowering the risk of print detachment. In the embodiments of the present disclosure, a three-dimensional printing system provided includes a material tray assembly, a support assembly, and a gas supply assembly, so that the release film oscillates periodically, which can rapidly break the vacuum adsorption state between the release film and the support member, being beneficial to reducing the separating force and separating stroke, improving the printing efficiency and printing success rate, and lowering the risk of print detachment. Hence, the pulsing release module provided in the embodiments of the present disclosure can improve the printing efficiency and printing success rate, and lowering the risk of print detachment.

## Claims

1. A pulsing release module, comprising:
a material tray assembly (1), the material tray assembly (1) comprises a release film (11);
a support assembly (2), the support assembly (2) is provided below the material tray assembly (1), the support assembly (2) comprises a support member (21), a first preset distance is provided between the support member (21) and the release film (11) in a height direction, so as to form a gas chamber (100) between the support member (21) and the release film (11), and the support member (21) is provided with a gas inlet (211) and a gas outlet (212) in communication with the gas chamber (100); and
a pulsing gas supply assembly (3), the pulsing gas supply assembly (3) comprises a gas oscillation component (31) and a gas transfer pipeline (32), the gas oscillation component (31) is provided on the gas transfer pipeline (32), and the gas transfer pipeline (32) is connected with the gas inlet (211).

2. The pulsing release module according to claim 1, wherein a sealing member (22) is provided along a circumferential direction of the support member (21), and the sealing member (22) is configured to be connected with the material tray assembly (1).

3. The pulsing release module according to claim 2, wherein the sealing member (22) is provided with a flow port (221) in communication with the gas chamber (100).

4. The pulsing release module according to claim 1, wherein an auxiliary member (84) is provided on a side of the support member (21) facing the release film (11), such that a separating angle is formed between the release film (11) and the support member (21) when the release film (11) is in contact with the support member (21) and has a tendency to move in a direction away from the support member (21).

5. The pulsing release module according to claim 4, wherein at least two auxiliary members (84) are distributed along a circumferential direction of the support member (21), such that the gas chamber (100) with a consistent height is formed between the support member (21) and the release film (11).

6. The pulsing release module according to claim 5, wherein four auxiliary members (84) are respectively provided corresponding to four corners of the support member (21); and/or four auxiliary members (84) are respectively provided corresponding to four sides of the support member (21).

7. The pulsing release module according to claim 4, wherein the auxiliary member (84) is made of any of: tape, plastic sheet, metal gasket, foam, wooden sheet, fiber cloth or a combination thereof.

8. The pulsing release module according to claim 1, wherein the pulsing gas supply assembly (3) further comprises a control valve (34) for controlling gas to enter the gas chamber (100) according to a preset requirement.

9. The pulsing release module according to any one of claims 1 to 8, wherein the support member (21) is a transparent rigid support member (21a) or a transparent flexible support member (21b).

10. The pulsing release module according to claim 9, wherein when the support assembly (2) is the transparent flexible support member (21b), the support assembly (2) further comprises a rigid substrate (23) provided below the transparent flexible support member (21b).

11. The pulsing release module according to claim 1, wherein the support member (21) is any of: a fluoropolymer film, a polydimethylsiloxane film, a polymethylpentene film, an acrylic adhesive, polymethyl methacrylate, polytetrafluoroethylene, polyethylene terephthalate, a fluoroethylene-vinyl copolymer, polyethylene, polypropylene, polyvinyl chloride, a photosensitive resin, a thermosensitive resin, glass, a display screen or a combination thereof.

12. A pulsing release material tray, wherein the pulsing release material tray comprises a release film (11) and a support member (21); a second preset distance is provided between the support member (21) and the release film (11) in a height direction, so as to form a gas chamber (100) between the support member (21) and the release film (11); the support member (21) is provided with a gas inlet (211) and a gas outlet (212) in communication with the gas chamber; and
the gas inlet (211) and the gas outlet (212) are configured to connect with a pulsing gas supply assembly (3).

13. The pulsing release material tray according to claim 12, wherein the support member (21) is a transparent flexible support member (21b).

14. The pulsing release material tray according to claim 13, wherein the transparent flexible support member (21b) is any of: a fluoropolymer film, a polydimethylsiloxane film, a polymethylpentene film, an acrylic adhesive, polymethyl methacrylate, polytetrafluoroethylene, polyethylene terephthalate, a fluoroethylene-vinyl copolymer, polyethylene, polypropylene, polyvinyl chloride, a photosensitive resin, a thermosensitive resin or a combination thereof.

15. The pulsing release material tray according to claim 13, wherein the support member (21) further comprises a rigid substrate (23) provided below the transparent flexible support member (21b).

16. The pulsing release material tray according to claim 12, wherein an auxiliary member (84) is provided on a side of the support member (21) facing the release film (11), such that a separating angle is formed between the release film (11) and the support member (21) when the release film (11) comes into contact with the support member (21) and has a tendency to move in a direction away from the support member (21).

17. The pulsing release material tray according to claim 16, wherein at least two auxiliary members (84) are distributed along a circumferential direction of the support member (21), so as to form the gas chamber (100) with a consistent height between the support member (21) and the release film (11).

18. The pulsing release material tray according to claim 17, wherein four auxiliary members (84) are respectively provided corresponding to four corners of the support member (21); and/or four auxiliary members (84) are respectively provided corresponding to four sides of the support member (21).

19. The pulsing release material tray according to claim 18, wherein the auxiliary member (84) is made of any of: tape, plastic sheet, metal gasket, foam, wooden sheet, fiber cloth or a combination thereof.

20. The pulsing release material tray according to claim 12, wherein the pulsing release material tray further comprises a material tray main body (12), a position sensor (13) is provided on the material tray main body (12), and the position sensor (13) is used for detecting position data of the release film (11).

21. A 3D printing device, comprising the pulsing release module of any one of claims 1 to 11 or the pulsing release material tray of any one of claims 12 to 20, wherein the 3D printing device further comprises a forming platform (4), an optical engine (5) and a control system (6), wherein the forming platform (4) is provided above a material tray assembly (1), the optical engine (5) is provided below a support assembly (2), and the control system (6) is associated with the forming platform (4), the optical engine (5) and the pulsing gas supply assembly (3).

22. The 3D printing device according to claim 21, wherein the control system (6) communicates with the pulsing gas supply assembly (3) to generate control instructions according to a preconfigured control strategy and send the control instructions to the pulsing gas supply assembly (3).

23. The 3D printing device according to claim 22, wherein the control strategy is configured to:
generate and send a first control instruction when one or more of the following are detected: a release film (11) of the 3D printing device is higher than a preset marking position, a gas pressure of gas in the 3D printing device is higher than a preset gas pressure range, a gas flow of the gas in the 3D printing device is higher than a preset range, a concentration of the gas in the 3D printing device is higher than a preset concentration range, or a force borne by a lower surface of the release film (11) of the 3D printing device is greater than a force borne by an upper surface, wherein the first control instruction comprises controlling the pulsing gas supply assembly (3) to reduce an amount of gas delivered; and
generate and send a second control instruction when one or more of the following are detected: the release film (11) of the 3D printing device is lower than a preset marking position, the gas pressure of the gas in the 3D printing device is lower than a preset gas pressure range, the gas flow of the gas in the 3D printing device is lower than a preset range, the concentration of the gas in the 3D printing device is lower than a preset concentration range, and the force borne by the upper surface of the release film (11) of the 3D printing device is less than the force borne by the lower surface, wherein the second control instruction comprises controlling the pulsing gas supply assembly (3) to increase the amount of gas delivered.

24. The 3D printing device according to claim 21, wherein the forming platform (4) is provided with a clearance design (83) for avoiding the auxiliary member (84).

25. The 3D printing device according to claim 24, wherein the clearance design (83) is at least one of a clearance chamfer and a clearance slot.

26. A 3D printing method using the 3D printing device according to any one of claims 21 to 25, comprising the following steps:
acquiring a collection of slice images corresponding to a three-dimensional model to be printed, and calculating a printing difficulty value corresponding to each layer of the slice images;
on a basis of the printing difficulty value, determining a printing parameter and a pulsing air parameter corresponding to each slice image; and
determining a model printing operation corresponding to each slice image on the basis of the printing parameter, and determining a model stripping operation corresponding to each slice image on a basis of the pulsing air parameter.

27. The 3D printing method according to claim 26, wherein the pulsing air parameter comprises a pulse frequency, and the pulse frequency is directly proportional to the printing difficulty value.

28. The 3D printing method according to claim 27, wherein the model separating operation comprises: during model separating, introducing a pulsed gas flow into the gas inlet (211) at the pulse frequency, such that a volume of the gas chamber (100) is periodically changed, thereby causing the release film (11) to oscillate periodically.

29. A three-dimensional printing system, comprising:
a material tray assembly (1), comprising a release film (11);
a support assembly (2), the support assembly (2) comprises a support member (21), a gas chamber (100) is formed between the support member (21) and the release film (11), and the gas chamber (100) is in communication with a gas inlet (211) and a gas outlet (212); and
a gas supply assembly, configured to transfer gas to the gas chamber (100) and configured to cause a volume of the gas chamber to change periodically.

30. The three-dimensional printing system according to claim 29, wherein the gas supply assembly is configured to intermittently transfer gas to the gas chamber (100).

31. The three-dimensional printing system according to claim 29, wherein the gas supply assembly transfers gas to the gas chamber (100) at different flow rates, and the gas in the gas chamber (100) is discharged through the gas outlet (212) at a constant flow rate.
